# FASCICULE DE BREVET EUROPEEN

(11) **EP 3 755 954 B1**
(45) Date de publication et mention de la délivrance du brevet: **27.03.2024**
(21) Numéro de dépôt: 19708354.6
(22) Date de dépôt: 11.02.2019
(51) Int. Cl.: F24H 3/04, H05B 3/24, B60H 1/22

(54) **CADRE POUR UN DISPOSITIF DE CHAUFFAGE ELECTRIQUE COMPRENANT UN ELEMENT DEFORMABLE ELASTIQUEMENT**
RAHMEN FÜR EINE ELEKTRISCHE HEIZVORRICHTUNG MIT EINEM ELASTISCH VERFORMBAREN ELEMENT
FRAME FOR AN ELECTRIC HEATING DEVICE, COMPRISING AN ELASTICALLY DEFORMABLE ELEMENT

(30) Priorité: 19.02.2018 FR 1851386
(43) Date de publication de la demande: 30.12.2020
(73) Titulaire: VALEO SYSTEMES THERMIQUES, 78320 Le Mesnil Saint-Denis (FR)
(72) Inventeur: PIERRON, Frédéric, 78322 LE MESNIL SAINT-DENIS CEDEX (FR); KARAASLAN, Serif, 78322 LE MESNIL SAINT-DENIS CEDEX (FR); FOURGOUS, Pascal, 78322 LE MESNIL SAINT-DENIS CEDEX (FR); COUAPEL, Yann, 78322 LE MESNIL SAINT-DENIS CEDEX (FR); DELCOURT, Romain, 78322 LE MESNIL SAINT-DENIS CEDEX (FR); TELLIER, Laurent, 78322 LE MESNIL SAINT-DENIS CEDEX (FR)
(74) Mandataire: Valeo Systèmes Thermiques
(86) Numéro de dépôt international: PCT/FR2019/050291
(87) Numéro de publication internationale: WO 2019/158844

(56) Documents cités:
- EP-A1- 1 462 733
- EP-A1- 1 564 503
- FR-A1- 2 954 469

## Description

L'invention concerne les dispositifs de chauffage électrique, notamment pour une installation de ventilation, de chauffage et/ou de climatisation d'un véhicule automobile.

Le réchauffage de l'air destiné au chauffage de l'habitacle d'un véhicule automobile, ainsi qu'au désembuage et au dégivrage des surfaces vitrées, est assuré par échange de chaleur entre un flux d'air et un liquide de refroidissement du moteur circulant dans un échangeur de chaleur.

Au démarrage du moteur et pendant une certaine durée suivant le temps de démarrage, les calories transportées par le liquide de refroidissement du moteur sont insuffisantes pour assurer un chauffage rapide et efficace de l'air amené à être soufflé dans l'habitacle. Cela est observé plus particulièrement avec certains types de moteur et présente un inconvénient par temps froid, car non seulement la température interne de l'habitacle ne peut être élevée rapidement, mais en outre les fonctions de désembuage et de dégivrage ne peuvent être assurées efficacement.

Pour remédier à ces inconvénients, il a été proposé de monter un dispositif de chauffage électrique additionnel dans le flux d'air dirigé vers l'habitacle, comme par exemple dans le document FR 2954 469 A1 qui divulgue un cadre pour un dispositif de chauffage électrique selon le préambule de la revendication 1.

Un tel dispositif de chauffage électrique comprend généralement un cadre présentant un corps de chauffe comprenant une pluralité de plaques conductrices parallèles entre lesquelles sont montés des éléments résistifs chauffants, par exemple des résistances à coefficient de température positif (CTP), et des éléments radiants augmentant la surface d'échange thermique avec le flux d'air traversant le dispositif de chauffage.

Ces différents éléments sont assemblés de manière à former au moins un élément chauffant, le ou les éléments chauffants constitutifs du corps de chauffe étant alors insérés dans un logement de celui-ci. À cet effet, le logement, défini par des parois, comporte des éléments élastiques formés de languettes inclinées par rapport aux parois à partir desquelles elles sont articulées, de manière à être disposé dans le logement et le chemin d'insertion lors du montage de l'élément chauffant. Ces languettes élastiques sont ainsi contraintes lors de l'insertion du ou des éléments chauffants et elles exercent alors une force de rappel élastique participant au plaquage de l'élément chauffant correspondant vers la paroi opposée du logement. On s'assure ainsi de la réduction de débattement de l'élément chauffant dans son logement qui doit être prévu avec des dimensions sensiblement supérieures à celles de l'élément chauffant pour permettre son insertion.

L'inconvénient lié à l'utilisation de ces éléments élastiques exerçant une force de rappel sur les éléments chauffants réside dans le fait que durant le roulage, ou en cas de chute du dispositif de chauffage, les éléments élastiques sont soumis à des vibrations plus ou moins importantes. Ces vibrations peuvent occasionner un bruit dans le circuit de ventilation desservant l'habitacle pouvant occasionner une gêne pour les usagers du véhicule automobile. Il est également possible que ces vibrations fragilisent voire cassent les éléments élastiques, les éléments chauffants n'étant alors plus maintenus correctement dans leur logement, ce qui peut provoquer au moins, là encore, une gêne sonore pour les usagers ou contribuer à une rupture mécanique des éléments chauffants.

Dans ce contexte, l'invention vise à proposer une alternative aux cadres connus de dispositifs de chauffage électrique additionnels, qui soit au moins aussi efficace, fiable.

L'invention propose à cet effet un cadre pour un dispositif de chauffage électrique d'un flux d'air circulant à l'intérieur d'une installation de ventilation, de chauffage, et/ou de climatisation d'un véhicule automobile selon la revendication 1. Un tel cadre comprend au moins un logement destiné à recevoir au moins un élément chauffant, le logement étant délimité par une pluralité de parois longitudinales formant un chemin d'insertion longitudinal pour un élément chauffant. Le chemin d'insertion est délimité longitudinalement par une paroi de fond qui s'étend à l'opposé d'une ouverture par laquelle peut être inséré l'élément chauffant destiné à venir dans le logement, un sens d'insertion étant défini depuis l'ouverture jusqu'à la paroi de fond. Selon l'invention, au moins l'une des parois longitudinales du logement comprend un élément de réduction de débattement faisant saillie de ladite paroi, ledit élément de réduction de débattement étant configuré pour venir au contact dudit au moins un élément chauffant et comportant une rampe s'étendant progressivement vers l'intérieur du logement par rapport au sens d'insertion, en rapprochement de la paroi longitudinale opposée, ledit élément de réduction de débattement étant agencé de sorte que son extrémité aval s'étend à distance de la paroi de fond.

Ainsi, l'invention offre une alternative pour le maintien des éléments chauffants dans un dispositif de chauffage. La présence d'un élément de réduction de débattement comportant une rampe permet de maintenir l'élément chauffant dans le logement en compensant le jeu existant entre l'élément chauffant et le logement quelle que soit la dimension du jeu, sans nécessiter des efforts d'insertion trop importants. Par compenser le jeu, on entend que l'élément de réduction de débattement selon l'invention est configuré pour venir au contact de l'élément chauffant. Le fait que l'extrémité aval s'étende à distance de la paroi de fond offre une flexibilité au niveau de cette zone de contact ce qui permet là encore de diminuer les efforts d'insertion à fournir et d'éviter une déformation de l'élément chauffant lorsque celui-ci vient au contact de l'élément de réduction de débattement. Ainsi, les performances des éléments chauffants ne sont pas altérées.

La forme de rampe de l'élément de réduction de débattement permet de guider progressivement, lors de son insertion, l'élément chauffant en direction de la paroi longitudinale opposée. Cette forme de rampe s'étend depuis l'extrémité amont de l'élément de réduction du débattement, c'est-à-dire l'extrémité amenée à être recouverte en premier par l'élément chauffant lors de son insertion, qui se trouve dans le plan de la paroi longitudinale. L'extrémité aval, à distance de la paroi de fond, peut correspondre au sommet de l'élément de réduction de débattement, c'est-à-dire le point le plus à l'intérieur du logement.

On peut prévoir que la face aval de l'élément de réduction de débattement, c'est-à-dire une face reliant le sommet de cet élément à la paroi longitudinale, en direction de la paroi de fond, est sensiblement perpendiculaire à la paroi longitudinale et parallèle à la paroi de fond.

Selon une ou plusieurs caractéristiques pouvant être prise seule ou en en combinaison, on pourra prévoir que :
- L'élément de réduction de débattement est situé sur un plan médian du cadre, et donc du logement dans lequel il s'étend. Ainsi, on s'assure, quelle que soit la largeur de l'élément de réduction de débattement, que la position de l'élément chauffant dans le logement est équilibrée.
- La paroi longitudinale comprend plusieurs éléments de réduction de débattement. De la sorte, l'élément chauffant peut être au contact de tels éléments sur plusieurs endroits et sa position dans le logement peut être d'autant plus stable.
- Les parois longitudinales définissant le logement comprennent chacune au moins un élément de réduction de débattement.
- Les éléments de réduction de débattement sont disposés en alternance sur une première paroi longitudinale et sur une deuxième paroi longitudinale. Par « en alternance », on entend par exemple que les éléments de réduction de débattement de la première paroi longitudinale ne partagent pas les axes transversaux des éléments de réduction de débattement situés sur la deuxième paroi longitudinale. Le décalage peut être constant. Il est entendu que cette caractéristique est également applicable dans le cas où il n'y aurait qu'un seul élément de réduction de débattement sur chacune des parois longitudinales.
- L'élément de réduction de débattement comporte une surface inclinée formant rampe, ladite surface inclinée présentant un angle d'inclinaison par rapport à la paroi longitudinale sur laquelle l'élément de réduction de débattement est situé.
- L'élément de réduction de débattement présente au moins une arête saillante agencée dans le prolongement de la surface inclinée et qui forme le sommet de l'élément de réduction de débattement, cette arête de sommet étant la partie de l'élément de réduction de débattement la plus à l'intérieur du logement. De la sorte, cette arête est une partie de l'élément de réduction de débattement susceptible d'être toujours au contact de l'élément chauffant lors de l'insertion de celui-ci, quels que soient les jeux de fabrication du cadre et de l'élément chauffant.
- L'extrémité aval de l'élément de réduction de débattement présente une face aval sensiblement parallèle à la paroi de fond. Un bord de cette face aval, à l'opposé de la paroi longitudinale qu'elle rejoint, forme l'arête saillante à sa jonction avec la surface inclinée formant rampe.
- L'élément de réduction de débattement est dans une zone définie entre la paroi de fond et une partie centrale du logement relativement à sa dimension longitudinale. On pourra prévoir que l'extrémité aval de l'élément de réduction de débattement est agencée à une distance longitudinale de la paroi de fond comprise entre 10 et 30 millimètres. De la sorte, l'extrémité aval est suffisamment loin de la paroi de fond pour autoriser le cas échéant une déformation de la partie de l'élément de réduction de débattement au contact de l'élément chauffant, tout en restant dans un contexte de réduction de débattement en fin de course d'insertion de l'élément chauffant, c'est-à-dire dans la zone où l'élément chauffant est le plus à même de débattre.
- L'élément de réduction de débattement est venu de matière avec la paroi longitudinale sur laquelle l'élément de réduction de débattement est situé. Une telle configuration permet de faciliter les opérations de fabrication du cadre, l'élément de réduction de débattement pouvant être obtenu dans la même opération de moulage du cadre par exemple.
- L'élément de réduction de débattement est réalisée indépendamment du cadre et il est ensuite fixé sur une paroi longitudinale de ce cadre. Une telle configuration permet de réaliser l'élément de réduction de débattement dans un matériau différent de celui utilisé pour le cadre, et donc de jouer sur les propriétés du matériau pour ne pas endommager l'élément chauffant lors du contact de l'élément de réduction de débattement avec l'élément chauffant par exemple.
- La surface inclinée présente des paliers parallèles à la paroi longitudinale sur laquelle l'élément de réduction de débattement est situé. Ainsi, on assure des paliers d'efforts lors de l'insertion de l'élément chauffant dans le logement.
- L'élément de réduction de débattement s'étend d'un bord à l'autre de la paroi longitudinale sur laquelle l'élément de réduction de débattement est situé.

L'invention concerne également un dispositif de chauffage électrique comprenant au moins un élément chauffant caractérisé en ce qu'il comprend un cadre tel que décrit précédemment et dans lequel l'au moins un élément chauffant est disposé.

Ledit au moins un élément chauffant peut être poussé au contact de l'élément de réduction de débattement, dans la direction de la paroi opposée à la paroi longitudinale sur laquelle l'élément de réduction de débattement est situé.

D'autres caractéristiques et avantages de la présente invention apparaitront plus clairement à l'aide de la description et des dessins parmi lesquels :
- la figure 1 est une vue d'ensemble en perspective d'un dispositif de chauffage électrique selon l'invention, comprenant un cadre dans lequel des éléments chauffants ont été insérés et à une extrémité duquel est fixée une interface de connexion électrique ;
- la figure 2 est un agrandissement d'une partie du cadre d'un dispositif de chauffage électrique selon l'invention montrant deux éléments de réduction de débattement équipant respectivement une paroi longitudinale participant à former le cadre ;
- la figure 3 est une vue de côté d'un élément de réduction de débattement selon une variante de réalisation ; et
- la figure 4 est une vue en perspective similaire à celle de la figure 2, illustrant un deuxième mode de réalisation du cadre du dispositif de chauffage électrique.

Il faut tout d'abord noter que les figures exposent l'invention de manière détaillée et peuvent bien entendu servir à mieux définir l'invention le cas échéant. Toutefois, il est à noter que ces figures n'exposent qu'une partie des exemples de réalisation possibles selon l'invention.

Dans la description qui va suivre, on se référera à une orientation en fonction des axes longitudinaux L, verticaux V et transversaux T, tels qu'ils sont définis par le trièdre L,V,T représenté sur les figures. L'axe longitudinal L correspond à la direction d'allongement du cadre du dispositif de chauffage électrique, l'axe transversal T perpendiculaire à l'axe longitudinal L, correspond à la direction suivie par le flux d'air à réchauffer traversant le dispositif de chauffage et l'axe vertical V est perpendiculaire à la fois à l'axe longitudinal L et à l'axe transversal T. Il est à noter que le choix des appellations de ces axes n'est pas limitatif de l'orientation que peut prendre le dispositif de chauffage électrique dans son application à un véhicule automobile.

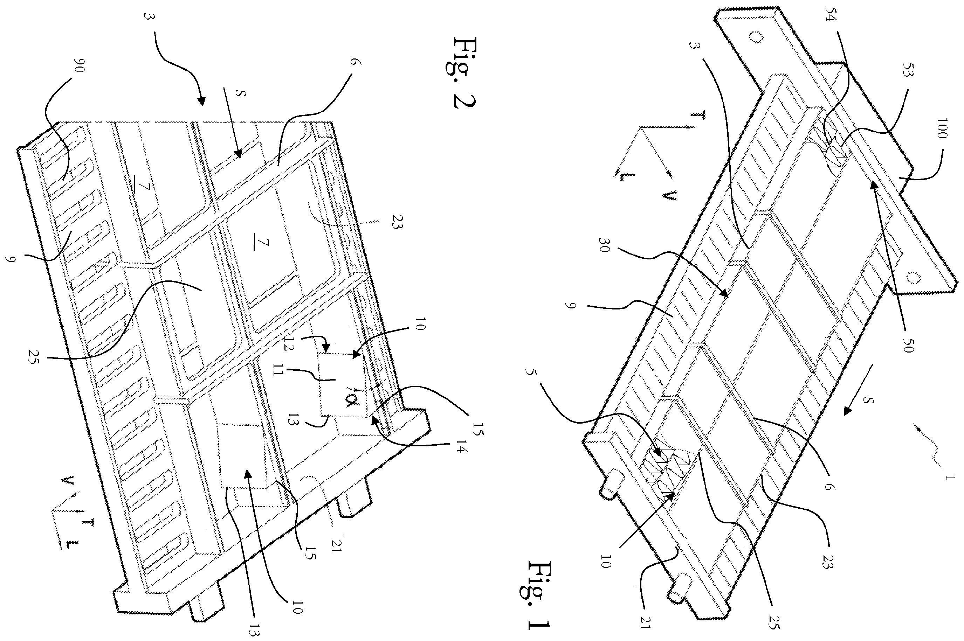

Le dispositif de chauffage électrique 1 montré en figure 1 est destiné à être logé dans un conduit de circulation d'air d'une installation de ventilation, de chauffage et/ou de climatisation, de manière à transformer l'énergie électrique prélevée sur le véhicule en énergie thermique restituée dans l'air traversant ce conduit. L'installation n'est pas représentée ici, mais on comprendra qu'un conduit principal de cette installation comporte de façon classique une ouverture réalisée dans la paroi pour l'insertion du dispositif de chauffage électrique 1.

La figure 1 montre un dispositif de chauffage électrique 1 selon l'invention, comprenant un cadre 3 dans lequel des éléments chauffants 5, aptes à transformer un courant électrique en énergie thermique, ont été insérés. Pour compenser les jeux de fabrication existant entre les éléments chauffants 5 et le cadre 3, le cadre 3 comprend des éléments de réduction de débattement 10 qui seront décrits plus loin.

Les éléments chauffants 5 comprennent des moyens aptes à échanger de la chaleur, tels que des éléments radiants 53 permettant d'augmenter la surface d'échange thermique, avec le flux d'air traversant le dispositif de chauffage électrique 1. Les éléments chauffants 5 comprennent également des électrodes 54 entre lesquelles sont disposées des éléments résistifs chauffants, par exemple des résistances à coefficient de température positif (CTP), et contre lesquelles sont fixés les éléments radiants 53. Les électrodes 54 et les résistances CTP permettent de transformer un courant électrique en énergie thermique. Il est à noter que les résistances à coefficient de température positif peuvent être collées directement sur les éléments radiants 53.

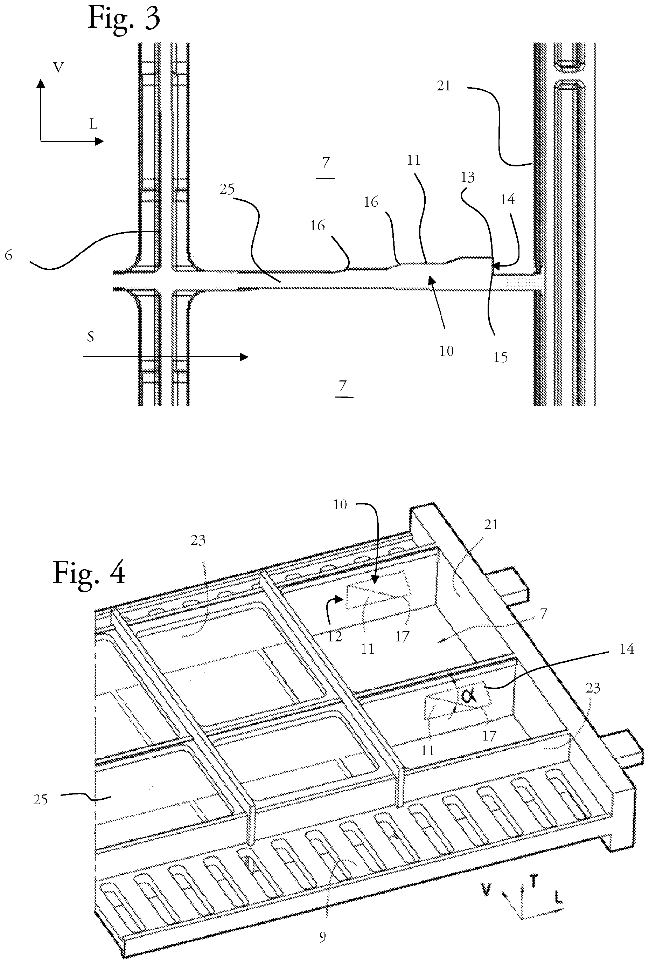

Le cadre 3 comporte un compartiment de chauffe 30, formant un carter de réception pour les éléments chauffants 5, et une interface de connexion 100 ménagée à une de ses extrémités. Les éléments chauffants 5 sont insérés dans des logements 7 (références visibles sur les figures 3 et 4) ménagés à l'intérieur du compartiment de chauffe 30. L'interface de connexion 100 vient fermer une ouverture 50 par lequel sont insérés les éléments chauffants 5 dans les logements 7 du compartiment de chauffe 30, en même temps qu'elle permet le raccordement du dispositif de chauffage électrique 1 à un réseau électrique du véhicule permettant l'alimentation électrique des éléments chauffants 5.

Le cadre 3 et le compartiment de chauffe 30 présentent une forme de parallélépipède rectangle. Les deux faces principales du cadre 3, respectivement avant et arrière, opposées selon l'axe transversal T, sont ajourées pour permettre le passage d'un flux d'air et une diffusion de chaleur dans le conduit où le dispositif de chauffage électrique 1 est installé. Le cadre 3 comprend un plan médian correspondant à un plan passant par une moitié du cadre et étant perpendiculaire à une direction suivie par le flux d'air circulant au travers du dispositif de chauffage électrique 1. Il est entendu que les faces avant et arrière du cadre 3 s'étendent dans des plans parallèles au plan médian.

On note également que le cadre 3 comprend des barrettes 9 disposées, ici, en périphérie du compartiment de chauffe 30. Ces barrettes 9 participent à la rigidification du cadre 3 et comprennent des fentes d'aération 90 autorisant le flux d'air à circuler à travers. Les fentes d'aération 90 sont positionnées les unes à la suite des autres selon l'axe longitudinal L du dispositif de chauffage 1, étant entendu que la forme et le nombre des passages d'air ici formés par les fentes n'est pas limitatif de l'invention. Il résulte de la disposition en périphérie des barrettes 9 que les logements 7 sont accolés les uns aux autres.

Le compartiment de chauffe 30 comprend une pluralité de parois. Parmi ces parois, on distingue des parois longitudinales 23, 25 s'étendant selon l'axe longitudinal L avec deux parois longitudinales latérales 23 et au moins une paroi longitudinale intermédiaire 25. Les parois longitudinales latérales 23 délimitent entre elles une dimension verticale du compartiment de chauffe 30, et les parois longitudinales intermédiaires 25 s'étendent parallèlement aux parois longitudinales latérales 23 et à l'intérieur du compartiment de chauffe 30, de manière à définir, entre elles et avec les parois longitudinales latérales 23, plusieurs logements 7 à l'intérieur du compartiment de chauffe 30. Ainsi, chaque logement 7 du cadre 3 est délimité par des parois. Plus précisément, chaque logement 7 est délimité verticalement par deux parois longitudinales 23, 25, qui peuvent être latérale 23 ou intermédiaire 25. Selon l'exemple de réalisation illustré, le cadre 3 comprend deux logements 7 avec une paroi longitudinale intermédiaire 25.

Pour chaque logement 7, une paroi longitudinale latérale 23 et la paroi longitudinale intermédiaire 25 délimitent, entre elles et verticalement, un chemin d'insertion pour l'élément chauffant 5. Le chemin d'insertion correspond au chemin emprunté par l'élément chauffant 5 lors de son insertion à l'intérieur du cadre. L'écartement entre les parois longitudinales 23, 25 d'un même logement 7 correspond à la dimension verticale de l'élément chauffant 5, aux jeux de fabrication près.

Chaque logement 7 est délimité par ailleurs par une paroi de fond 21 s'étendant dans un plan transversal vertical. Cette paroi de fond 21 est située à l'opposé de l'ouverture par laquelle les éléments chauffants 5 sont insérés dans le compartiment de chauffe 30. Il est à noter que, selon l'exemple de réalisation illustré, les éléments chauffant 5 sont insérés dans les logements 7 en suivant une direction d'insertion parallèle à l'axe longitudinal L. Le sens d'insertion S est quant à lui défini depuis l'ouverture vers la paroi de fond 21.

Le cadre 3 comprend également des nervures 6 délimitant transversalement le chemin d'insertion de l'élément chauffant 5 dans le logement. Pour cela, les nervures 6 s'étendent au minimum entre deux parois longitudinales 23, 25 formant un même logement 7, et il convient de noter que ces nervures ont également un rôle de rigidification du cadre 3 et du compartiment de chauffe 30. L'écartement entre deux nervures 6 situées de part et d'autre du chemin d'insertion selon l'axe transversal T correspond à la dimension transversale de l'élément chauffant 5, aux jeux de fabrication près.

Selon l'invention et afin de compenser les jeux de fabrication entre un élément chauffant 5 et les parois délimitant le logement 7 recevant cet élément chauffant, le cadre 3, et plus particulièrement au moins une paroi longitudinale 23, 25 participant à définir un logement recevant un élément chauffant, comprend au moins un élément de réduction de débattement 10 évoqué précédemment.

La figure 2 illustre le cadre sans les éléments chauffants, pour rendre visible deux éléments de réduction de débattement 10 respectivement agencés dans un logement 7, en travers du chemin d'insertion de l'élément chauffant amené à occuper ce logement, chaque élément de réduction de débattement étant configuré de manière à présenter une extrémité aval à distance de la paroi de fond 21.

Chaque élément de réduction de débattement 10 s'étend en saillie d'une paroi longitudinale 23, 25 et il comporte une surface inclinée 11 formant rampe qui s'étend progressivement vers l'intérieur du logement 7, en rapprochement de la paroi longitudinale opposée. Plus particulièrement, l'élément de réduction de débattement 10 présente, en section longitudinale, c'est-à-dire dans un plan de coupe longitudinal et vertical, une forme triangulaire.

La surface inclinée 11 s'étend depuis une extrémité amont 12 de l'élément de réduction de débattement, en éloignement de la paroi longitudinale correspondante, et en rapprochement de la paroi longitudinale opposée. Plus précisément, la surface inclinée 11 forme un angle α avec la paroi longitudinale 23, 25 depuis laquelle l'élément de réduction de débattement est en saillie.

La rampe formée par cette surface inclinée s'étend dans le prolongement de la paroi longitudinale et elle s'étend jusqu'à un bord d'extrémité formant arête de sommet 13, ce bord d'extrémité étant la partie de l'élément de réduction de débattement la plus à l'intérieur du logement et donc la partie susceptible d'être en contact avec l'élément chauffant quels que soient les jeux de fabrication.

Dans l'exemple illustré sur la figure 2, la rampe s'étend de façon régulière et continue depuis l'extrémité amont 12 jusqu'à l'arête de sommet 13, de sorte que l'effort d'insertion de l'élément chauffant reste mesuré, sans à coup que pourrait former un élément sans rampe. Selon les dimensions de l'élément chauffant, c'est-à-dire selon les jeux de fabrications de cet élément chauffant et du cadre, on comprend que la surface inclinée formera un obstacle à l'insertion de l'élément chauffant au niveau de son extrémité amont ou au niveau de l'arête de sommet. Dans tous les cas, la présence de cet élément de réduction de débattement tend à dévier l'élément chauffant vers la paroi longitudinale opposée, et à figer en position l'élément chauffant dans le cadre, de manière à réduire le battement des composants lorsque le dispositif de chauffage est assemblé. Plus particulièrement, et tel que cela est représenté schématiquement sur la figure 1, les bords des éléments radiants 53 amenés à être disposés en regard de cette paroi longitudinale opposée à celle portant l'élément de réduction de débattement peuvent être légèrement écrasés contre la paroi longitudinale, ce qui participe à figer la position de l'élément chauffant.

L'élément de réduction de débattement comprend en outre une face aval 14, qui relie l'arête de sommet 13 à la paroi longitudinale, en aval de l'arête de sommet, c'est-à-dire à l'opposé de la surface inclinée 11 formant rampe. Dans l'exemple illustré sur la figure 2 et les suivantes, cette face aval 14 est droite, agencée dans un plan vertical et transversal comprenant par ailleurs l'arête de sommet. De la sorte, la face aval est perpendiculaire à la paroi longitudinale et parallèle à la paroi de fond. On comprend que dans une variante non représentée, la face aval pourrait être inclinée et présenter une dimension verticale diminuant progressivement jusqu'à la jonction de l'extrémité aval 15 avec la paroi longitudinale, dès lors que cette jonction avec la paroi longitudinale s'étend à distance de la paroi de fond conformément à la caractéristique de l'invention précédemment décrite.

En effet, selon l'invention, il importe que l'élément de réduction de débattement ne soit pas en prise avec la paroi de fond 21, qui forme une surface d'arrêt de la translation de l'élément chauffant, perpendiculaire à son insertion dans le logement. Le fait que la jonction de l'extrémité aval 15 de l'élément de réduction de débattement avec l'une des parois définissant le logement soit indépendante de la paroi de fond permet une souplesse de l'élément de réduction de débattement dans sa zone de contact avec l'élément chauffant et notamment au niveau de l'arête de sommet 13, qui peut s'affaisser légèrement sous l'effort d'insertion en direction de la paroi de fond 21 et donc le cas échéant diminuer un peu cet effort d'insertion à fournir, tout en assurant correctement la fonction de réduction de débattement sans prendre de risque d'une rupture de cet élément du fait de son caractère massique.

Le débattement des éléments chauffants 5 à l'intérieur des logements pouvant être plus important à leurs extrémités longitudinales proches de la paroi de fond, il est préférable que les éléments de réduction de débattement soient situés au voisinage de la paroi de fond, et notamment dans une zone définie entre la paroi de fond 21 et une partie centrale du logement 7 relativement à sa dimension longitudinale.

Dès lors, une configuration avantageuse est illustrée sur la figure 2, dans laquelle l'élément de réduction de débattement a effet dans une zone du cadre particulièrement sensible à ces débattements, mais sans l'inconvénient d'être solidaire de la paroi de fond et de la rigidité qui en résulterait. Par ailleurs, on peut noter que la zone de dégagement qui est formée entre la face aval 14 et la paroi de fond participe à l'allègement du cadre.

Avantageusement, l'élément de réduction de débattement est dans une zone voisine de la paroi de fond, et en tout cas dans la deuxième partie longitudinale du cadre, c'est-à-dire, relativement à cette dimension longitudinale, entre une partie centrale du logement et la paroi de fond. On pourra prévoir que l'extrémité aval de l'élément de réduction de débattement, à savoir la face aval 14 ou la jonction de cette face aval avec la paroi longitudinale dans le cas où la face aval n'est pas parallèle à la paroi de fond 21, est agencée à une distance longitudinale de la paroi de fond comprise entre 10 et 30 millimètres. De la sorte, l'extrémité aval est suffisamment loin de la paroi de fond pour apporter le cas échéant une certaine souplesse à l'élément de réduction de débattement, notamment au niveau de son arête de sommet 13, tout en restant dans un contexte de réduction de débattement en fin de course d'insertion de l'élément chauffant, c'est-à-dire dans la zone où l'élément chauffant est le plus à même de débattre.

Par ailleurs, en termes de dimensionnement, l'élément de réduction de débattement 10 peut présenter une longueur, mesurée selon l'axe longitudinal L, qui peut à titre d'exemple être comprise entre 10 et 15mm.

Il convient de noter que la largeur d'un élément de réduction de débattement, la largeur étant mesurée le long de l'axe transversal T, peut être différente de la largeur de l'élément de réduction de débattement représenté sur la figure 2. A titre d'exemple, l'élément de réduction de débattement peut présenter une largeur égale à la moitié de la largeur de la paroi longitudinale depuis laquelle il s'étend, en étant centré transversalement sur celle-ci.

Par ailleurs, la hauteur d'un élément de réduction de débattement, la hauteur étant mesurée le long de l'axe vertical V, peut être de l'ordre de 1 à 10% de la hauteur du logement dans lequel il s'étend. De préférence, la hauteur de l'élément de réduction de débattement, mesurée selon l'axe vertical V, est comprise entre 0,5 et 1,5 millimètre et plus particulièrement entre 1 et 1,5 millimètre, sachant que le jeu de fabrication entre l'élément chauffant 5 et le logement 7 est généralement compris entre 0,2 millimètre et 0,5 millimètre.

Il est à noter qu'en cas de pluralité d'éléments de réduction de débattement sur des parois longitudinales définissant un même logement, la somme des hauteurs de chacun des éléments de réduction de débattement est prise en considération, et notamment lorsque ces éléments sont disposés dans la même zone du logement, afin de s'assurer que la présence des éléments de réduction de débattement ne génère pas un goulet d'étranglement qui augmenterait les efforts d'insertion des éléments chauffants.

Selon une première variante de réalisation, illustrée sur la figure 3, l'élément de réduction de débattement diffère de ce qui précède en ce que la surface inclinée 11 formant la rampe de guidage pour l'élément chauffant présente des paliers 16, ici au nombre de trois. Ces paliers interrompent régulièrement la pente de la rampe et ils ménagent ainsi des interruptions dans l'augmentation de l'effort d'insertion des éléments chauffants dans le logement. On comprendra que le nombre de paliers pourraient être différent de celui ici illustré, sans pour autant sortir du contexte de cette variante de réalisation de l'invention.

La figure 4 illustre un deuxième mode de réalisation de l'invention, qui se distingue notamment par la configuration de la face amont formant rampe.

Cette surface inclinée 11 présente ici une forme triangulaire ayant pour conséquence de former un arête saillante 17 orientée vers le logement 7. L'arête saillante 17 est destinée à venir au contact de l'élément chauffant 5. Une telle arête permet de générer une déformation plastique de l'élément chauffant, en le perçant le cas échéant. L'arête saillante 17 s'étend de préférence selon le sens d'insertion S de l'élément chauffant dans le logement. Ainsi, ici l'arête saillante 17 s'étend selon l'axe d'allongement longitudinal de la paroi longitudinale 23, 25 sur laquelle est situé l'élément de réduction de débattement 10.

Comme précédemment, l'élément de réduction de débattement présente une surface inclinée 11 formant un angle α avec la paroi longitudinale 23, 25 sur laquelle il est situé, et cet élément de réduction de débattement est configuré de manière à s'étendre à distance de la paroi de fond, avec une extrémité aval en prise sur la paroi longitudinale.

Dans chacun des modes et variantes de réalisation présentés ci-dessus, l'élément de réduction de débattement 10 peut être formé par une pièce rapportée, c'est-à-dire une pièce réalisée séparément puis rendue solidaire de la paroi longitudinale correspondante, ou bien il peut être venu de matière avec la paroi longitudinale 23, 25 du logement 7, notamment par une unique opération de moulage.

Bien entendu, un panachage des différentes formes et/ou des différents agencements des éléments de réduction de débattement pour un même cadre 3, voire une même paroi longitudinale, est possible.

On va maintenant décrire le montage du dispositif de chauffage électrique 1 comprenant le cadre 3 selon l'invention.

On réalise dans un premier temps l'insertion des éléments chauffants 5 dans les logements appropriés 7 à l'intérieur du compartiment de chauffe 30. Pour cela, on insère les éléments chauffants 5 par l'ouverture formée à une extrémité du cadre 3, et on fait glisser les éléments chauffants 5 en translation vers la paroi de fond 21 du logement 7, notamment selon le sens d'insertion matérialisé par la flèche S.

Au cours de l'insertion dans un logement équipé d'au moins un élément de réduction de débattement, l'élément chauffant 5 entre en contact avec l'élément de réduction de débattement agencé en travers du chemin d'insertion. Cet élément chauffant 5 est alors dévié de sa trajectoire rectiligne initiale, en étant poussé par l'élément de réduction de débattement en direction de la paroi longitudinale opposée à celle sur laquelle est ménagé l'élément de réduction de débattement. Le fait que l'élément de réduction de débattement présente une extrémité aval libre, c'est-à-dire une extrémité qui s'étend longitudinalement à distance de la paroi de fond, génère une souplesse qui permet une légère déformation l'élément de réduction de débattement au niveau de l'arête au contact avec l'élément chauffant. De la sorte, les efforts à fournir pour pousser l'élément chauffant jusqu'à la paroi de fond, alors qu'il est par ailleurs poussé contre une paroi longitudinale par l'intermédiaire de l'élément de réduction de débattement, sont minimes.

L'insertion de l'élément chauffant 5 se poursuit jusqu'à ce qu'il rencontre la paroi de fond 21 ou une autre butée mécanique du dispositif de chauffage.

Enfin, le compartiment de chauffe 30 est fermé par l'interface de connexion 100. L'interface de connexion 100 est alors disposée à une extrémité du compartiment de chauffe 30 et permet le raccordement du dispositif de chauffage électrique 1 à un réseau électrique du véhicule. Le dispositif de chauffage 1 est ensuite inséré dans un conduit de l'installation de chauffageventilation et/ou climatisation.

La description qui précède explique clairement comment l'invention permet d'atteindre les objectifs qu'elle s'est fixés et notamment de proposer un dispositif de chauffage 1 dans lequel les éléments chauffants 5 sont facilement insérés et ne débattent pas à l'intérieur de leur logement, par l'intermédiaire d'éléments de réduction de débattement particuliers en ce qu'ils présentent une forme de rampe et en ce que leur extrémité aval, à savoir l'extrémité atteinte en dernier par les éléments chauffants lors de leur insertion, est agencée à distance de la paroi de fond délimitant le chemin d'insertion. Tel que cela a pu apparaître à la lecture des modes de réalisation présentés à titre d'exemple, ces éléments de réduction de débattement sont optimisés d'une part par leur forme de rampe de sorte qu'ils permettent une déviation des éléments chauffants lors de leur insertion, en proposant une rigidité suffisante pour réaliser cette déviation et/ou déformation et pour éviter les risques de cassure lors des manipulations du dispositif de chauffage, et d'autre part par leur extrémité aval configurée pour ne pas s'étendre jusqu'à la paroi de fond, qui autorise une souplesse de l'élément de réduction de débattement permettant de limiter l'effet du contact de l'élément de réduction de débattement sur l'élément chauffant correspondant.

Il convient de noter que l'élément de réduction de débattement selon l'invention n'est pas un élément déformable amené à reprendre sa position d'origine par effort de rappel, mais bien un élément fixe dont la position au sein du logement n'est pas modifiée par le passage de l'élément chauffant, avec le cas échéant une souplesse générée localement au niveau du bord d'arête formée en bout de rampe pour permettre le passage de cet élément chauffant.

L'invention telle qu'elle vient d'être décrite ne saurait se limiter aux moyens et configurations exclusivement décrits et illustrés, et s'applique également à tous moyens ou configurations, équivalents et à toute combinaison de tels moyens ou configurations, tels que définis par les revendications.

## Revendications

1. Cadre (3) pour un dispositif de chauffage électrique (1) d'un flux d'air circulant à l'intérieur d'une installation de ventilation, de chauffage, et/ou de climatisation d'un véhicule automobile dans lequel est disposé au moins un éléments chauffant (5), ledit cadre (3) comprenant au moins un logement (7) destiné à recevoir ledit au moins un élément chauffant (5), le logement (7) étant délimité par une pluralité de parois longitudinales (23, 25) formant un chemin d'insertion longitudinal pour ledit au moins un élément chauffant, ledit chemin d'insertion étant délimité longitudinalement par une paroi de fond (21) qui s'étend à l'opposé d'une ouverture (50) par laquelle peut être inséré l'élément chauffant (5) destiné à venir dans le logement, un sens d'insertion étant défini depuis l'ouverture (50) jusqu'à la paroi de fond (21), au moins l'une des parois longitudinales (23, 25) du logement (7) comprenant un élément de réduction de débattement (10) faisant saillie de ladite paroi, ledit élément de réduction de débattement (10) étant configuré pour venir au contact dudit au moins un élément chauffant (5), ledit élément de réduction de débattement (10) étant agencé de sorte que son extrémité aval (14, 15) s'étend à distance de la paroi de fond (21), **caractérisé en ce que** ledit élément de réduction de débattement (10) comporte une rampe (11) s'étendant progressivement vers l'intérieur du logement par rapport au sens d'insertion, en rapprochement de la paroi longitudinale opposée.

2. Cadre selon la revendication précédente, **caractérisé en ce que** la paroi longitudinale (23, 25) comprend plusieurs éléments de réduction de débattement (10).

3. Cadre selon l'une quelconque des revendications précédentes, **caractérisé en ce que** les parois longitudinales (23, 25) définissant le logement (7) comprennent chacune au moins un élément de réduction de débattement (10).

4. Cadre selon l'une quelconque des revendications précédentes, **caractérisé en ce que** l'élément de réduction de débattement (10) comporte une surface inclinée (11) formant rampe, ladite surface inclinée (11) présentant un angle (α) d'inclinaison par rapport à la paroi longitudinale (23, 25) sur laquelle l'élément de réduction de débattement (10) est situé.

5. Cadre selon l'une quelconque des revendications précédentes, **caractérisé en ce que** l'élément de réduction de débattement (10) présente au moins une arête (13, 17) agencée dans le prolongement de la rampe (11) et qui forme le sommet de l'élément de réduction de débattement, cette arête étant la partie de l'élément de réduction de débattement la plus à l'intérieur du logement.

6. Cadre selon l'une quelconque des revendications précédentes, **caractérisé en ce que** l'extrémité aval de l'élément de réduction de débattement (10) présente une face aval (14) sensiblement parallèle à la paroi de fond (21).

7. Cadre selon l'une quelconque des revendications précédentes, **caractérisé en ce que** l'élément de réduction de débattement (10) est dans une zone définie entre la paroi de fond (21) et une partie centrale du logement (7) relativement à sa dimension longitudinale.

8. Cadre selon l'une quelconque des revendications précédentes, **caractérisé en ce que** l'élément de réduction de débattement (10) est venu de matière avec la paroi longitudinale (23, 25) sur laquelle cet élément de réduction de débattement (10) est situé.

9. Cadre selon l'une quelconque des revendications précédentes, **caractérisé en ce que** la surface inclinée (11) présente des paliers (16) parallèles à la paroi longitudinale (23, 25) sur laquelle l'élément de réduction de débattement (10) est situé.

10. Dispositif de chauffage électrique (1) comprenant au moins un élément chauffant (5) **caractérisé en ce qu'**il comprend un cadre (3) selon l'une quelconque des revendications précédentes dans lequel l'au moins un élément chauffant (5) est disposé.

## Patentansprüche

1. Rahmen (3) für eine elektrische Heizvorrichtung (1) für einen im Inneren einer Lüftungs-, Heizungs- und/oder Klimaanlage eines Kraftfahrzeugs zirkulierenden Luftstrom, in welchem mindestens ein Heizelement (5) angeordnet ist, wobei der Rahmen (3) mindestens eine Aufnahme (7) umfasst, die dazu bestimmt ist, das mindestens eine Heizelement (5) aufzunehmen, wobei die Aufnahme (7) von mehreren Längswänden (23, 25) begrenzt wird, die einen längs verlaufenden Einführungsweg für das mindestens eine Heizelement bilden, wobei der Einführungsweg in Längsrichtung von einer Rückwand (21) begrenzt wird, welche sich gegenüber einer Öffnung (50) erstreckt, durch welche das Heizelement (5), das dazu bestimmt ist, in die Aufnahme zu gelangen, eingeführt werden kann, wobei eine Einführungsrichtung von der Öffnung (50) bis zu der Rückwand (21) definiert ist, wobei mindestens eine der Längswände (23, 25) der Aufnahme (7) ein Element zur Reduzierung des Bewegungsspielraums (10) umfasst, das von dieser Wand vorsteht, wobei das Element zur Reduzierung des Bewegungsspielraums (10) so konfiguriert ist, dass es das mindestens eine Heizelement (5) berührt, wobei das Element zur Reduzierung des Bewegungsspielraums (10) derart angeordnet ist, dass sich sein stromabwärtiges Ende (14, 15) in einem Abstand von der Rückwand (21) erstreckt,
**dadurch gekennzeichnet, dass** das Element zur Reduzierung des Bewegungsspielraums (10) eine Rampe (11) aufweist, die sich, bezogen auf die Einführungsrichtung, zunehmend zum Inneren der Aufnahme (7) hin erstreckt, wobei sie sich der gegenüberliegenden Längswand nähert.

2. Rahmen nach dem vorhergehenden Anspruch, **dadurch gekennzeichnet, dass** die Längswand (23, 25) mehrere Elemente zur Reduzierung des Bewegungsspielraums (10) umfasst.

3. Rahmen nach einem der vorhergehenden Ansprüche, **dadurch gekennzeichnet, dass** die Längswände (23, 25), welche die Aufnahme (7) definieren, jeweils mindestens ein Element zur Reduzierung des Bewegungsspielraums (10) umfassen.

4. Rahmen nach einem der vorhergehenden Ansprüche, **dadurch gekennzeichnet, dass** das Element zur Reduzierung des Bewegungsspielraums (10) eine geneigte Fläche (11) aufweist, die eine Rampe bildet, wobei die geneigte Fläche (11) einen Neigungswinkel (α) bezüglich der Längswand (23, 25), an welcher sich das Element zur Reduzierung des Bewegungsspielraums (10) befindet, aufweist.

5. Rahmen nach einem der vorhergehenden Ansprüche, **dadurch gekennzeichnet, dass** das Element zur Reduzierung des Bewegungsspielraums (10) mindestens eine Kante (13, 17) aufweist, die in der Verlängerung der Rampe (11) angeordnet ist und die den Scheitel des Elements zur Reduzierung des Bewegungsspielraums bildet, wobei diese Kante der Teil des Elements zur Reduzierung des Bewegungsspielraums ist, der sich in der Aufnahme am weitesten innen befindet.

6. Rahmen nach einem der vorhergehenden Ansprüche, **dadurch gekennzeichnet, dass** das stromabwärtige Ende des Elements zur Reduzierung des Bewegungsspielraums (10) eine stromabwärtige Seite (14) aufweist, die im Wesentlichen parallel zur Rückwand (21) ist.

7. Rahmen nach einem der vorhergehenden Ansprüche, **dadurch gekennzeichnet, dass** sich das Element zur Reduzierung des Bewegungsspielraums (10) in einem Bereich befindet, der zwischen der Rückwand (21) und einem, bezogen auf ihre Längsabmessung, mittleren Teil der Aufnahme (7) definiert ist.

8. Rahmen nach einem der vorhergehenden Ansprüche, **dadurch gekennzeichnet, dass** das Element zur Reduzierung des Bewegungsspielraums (10) stoffschlüssig mit der Längswand (23, 25) verbunden ist, an welcher sich dieses Element zur Reduzierung des Bewegungsspielraums (10) befindet.

9. Rahmen nach einem der vorhergehenden Ansprüche, **dadurch gekennzeichnet, dass** die geneigte Fläche (11) Absätze (16) aufweist, die parallel zu der Längswand (23, 25) sind, an welcher sich das Element zur Reduzierung des Bewegungsspielraums (10) befindet.

10. Elektrische Heizvorrichtung (1), welche mindestens ein Heizelement (5) umfasst, **dadurch gekennzeichnet, dass** sie einen Rahmen (3) nach einem der vorhergehenden Ansprüche umfasst, in welchem das mindestens eine Heizelement (5) angeordnet ist.

## Claims

1. Frame (3) for an electric heating device (1) for heating an air flow circulating inside a heating, ventilation and/or air-conditioning installation of a motor vehicle in which at least one heating element (5) is disposed, said frame (3) comprising at least one housing (7) intended to receive said at least one heating element (5), the housing (7) being delimited by a plurality of longitudinal walls (23, 25) forming a longitudinal insertion path for said at least one heating element, said insertion path being delimited longitudinally by an end wall (21) that extends on the opposite side from an opening (50) through which it is possible to insert the heating element (5) intended to be located in the housing, an insertion direction being defined from the opening (50) to the end wall (21),
at least one of the longitudinal walls (23, 25) of the housing (7) comprising a displacement reducing element (10) protruding from said wall, said displacement reducing element (10) being configured in order to contact said at least one heating element (5), said displacement reducing element (10) being arranged such that its downstream end (14, 15) extends at a distance from the end wall (21),
**characterized in that** said displacement reducing element (10) has a ramp (11) extending progressively towards the interior of the housing (7) with respect to the insertion direction, towards the opposite longitudinal wall.

2. Frame according to the preceding claim, **characterized in that** the longitudinal wall (23, 25) comprises a plurality of displacement reducing elements (10) .

3. Frame according to either one of the preceding claims, **characterized in that** the longitudinal walls (23, 25) defining the housing (7) each comprise at least one displacement reducing element (10).

4. Frame according to any one of the preceding claims, **characterized in that** the displacement reducing element (10) has an inclined surface (11) forming a ramp, said inclined surface (11) exhibiting an inclination angle (α) with respect to the longitudinal wall (23, 25) on which the displacement reducing element (10) is situated.

5. Frame according to any one of the preceding claims, **characterized in that** the displacement reducing element (10) has at least one ridge (13, 17) that is arranged in the continuation of the ramp (11) and forms the apex of the displacement reducing element, this ridge being the innermost part of the displacement reducing element in the housing.

6. Frame according to any one of the preceding claims, **characterized in that** the downstream end of the displacement reducing element (10) has a downstream face (14) substantially parallel to the end wall (21).

7. Frame according to any one of the preceding claims, **characterized in that** the displacement reducing element (10) is in a zone defined between the end wall (21) and a central part of the housing (7) relative to its longitudinal dimension.

8. Frame according to any one of the preceding claims, **characterized in that** the displacement reducing element (10) is integral with the longitudinal wall (23, 25) on which this displacement reducing element (10) is situated.

9. Frame according to any one of the preceding claims, **characterized in that** the inclined surface (11) has levels (16) parallel to the longitudinal wall (23, 25) on which the displacement reducing element (10) is situated.

10. Electric heating device (1) comprising at least one heating element (5), **characterized in that** it comprises a frame (3) according to any one of the preceding claims, in which the at least one heating element (5) is disposed.
